# EUROPEAN PATENT SPECIFICATION

(11) **EP 3 617 015 B1**
(45) Date of publication and mention of the grant of the patent: **15.12.2021**
(21) Application number: 17935778.5
(22) Date of filing: 28.12.2017
(51) Int. Cl.: B60T 13/68, B60T 13/66, B60T 17/22, B60T 8/17

(54) **TRAIN AXLE SPEED CONTROL DEVICE AND TRAIN**
ZUGACHSENGESCHWINDIGKEITSSTEUERUNGSVORRICHTUNG UND ZUG
DISPOSITIF DE COMMANDE DE VITESSE D'ESSIEU DE TRAIN ET TRAIN

(30) Priority: 20.12.2017 CN 201711386188
(43) Date of publication of application: 04.03.2020
(73) Proprietor: CRRC Changchun Railway Vehicles Co., Ltd., Changchun, Jilin 130000 (CN)
(72) Inventor: WANG, Lei, Jilin 130000 (CN); QIAO, Feng, Jilin 130000 (CN); XIN, Zhiqiang, Jilin 130000 (CN); ZHAO, Yangkun, Jilin 130000 (CN); MA, Yongjing, Jilin 130000 (CN)
(74) Representative: Sharman, Thomas Alexander
(86) International application number: PCT/CN2017/119206
(87) International publication number: WO 2019/119496

(56) References cited:
- CN-A- 101 181 894
- CN-A- 103 786 700
- CN-A- 106 891 879
- CN-U- 203 439 027
- CN-U- 205 239 474
- CN-U- 206 327 349
- DE-A1-102011 113 119
- US-A- 5 636 907

## Description

### FIELD

The present invention relates to the technical field of train control, and in particular to a train axle speed control apparatus and a train.

### BACKGROUND

With the continuous development in the field of high-speed trains, more and more people choose high-speed trains and more and more high-speed train services are provided, because people all prefer to more convenient and comfortable, faster and safer travels. Therefore, a researching direction for those skilled in the art is to improve convenience and comfort while ensuring safety of high-speed trains.

The forward movement of a high-speed train through which we travel is driven by the kinetic energy converted from electric power supplied to the train. Specifically, the movement of the train relies on rotations of wheels which are driven by axles connected to the wheels. The axle is rotated by a driving force transmitted from an upper layer device or is decelerated gradually by a brake force transmitted from an upper layer device. That is, a speed of the train may be reflected to a great extent by rotation speed information of the train axle.

In the conventional technology, only a rotation speed detection device for detecting the rotation speed of the train axle is provided, for detecting whether a real-time rotation speed of the train axle corresponds to a provided brake cylinder pressure during braking of the train. However, in some cases, a predetermined brake cylinder pressure is provided, but an axle speed acquired by an axle speed sensor does not correspond to the provided brake cylinder pressure due to a fault or an anomaly occurred in an unknown position on the transmission path of the brake cylinder pressure. If an axle rotates at an abnormal speed for a long period of time, there may be a serious consequence. Therefore, an adjustment mechanism is adopted in the conventional technology, which includes adjusting the provided brake cylinder pressure based on the returned axle speed information by estimation and trails, such that the axle speed returns to normal. Since the axle speed, which is a final resultant value, is used as the only adjustment parameter, the adjustment has poor effect, and may have a more serious consequence in the absence of any intermediate process value.

DE 102011113119 A1 published on March 14, 2013 discloses an electronic brake control device that includes pressure sensors provided for determining the brake pressure present in or behind the main control valve device, and a further pressure sensor provided on each discharge valve device, which detects the pressure downstream of the discharge valve device or on the pneumatic cylinder of the first friction brake element, a speed sensor which monitors the wheel speed and/or the speed of the assigned wheel to be braked, and a braking action sensor which can be designed as a braking force and/or braking torque sensor. Each braking effect sensor is assigned to a wheel or axle to be braked. The brake control device can trigger an actuation of one or more of the braking devices and, based on the received data from the braking action sensors and the pressure sensors, monitor a relationship between the effective brake pressure and the braking effect achieved. Signals from a speed sensor assigned to a drain valve device and from a braking action sensor are each fed directly to an integrated drain valve device such that the integrated drain valve device can control or regulate the brake pressure in the force generator of the associated friction brake device in accordance with the electronic brake control device.

Therefore, an issue to be solved by those skilled in the art is to overcome the above defects in the existing train axle speed control apparatus.

### SUMMARY

An object of the present invention is to provide a train axle speed control apparatus. In the train axle speed control apparatus, a brake cylinder pressure detection device is additionally provided on a brake cylinder pressure transmission pipeline for transmitting a provided brake cylinder pressure, to detect a brake cylinder pressure actually transmitted to a train axle, such that a fault can be located more accurately, an axle speed can be adjusted more accurately and more efficiently in conjunction with a detection result, thus improving travel experience of passengers.

Another object of the present invention is to provide a train provided with the above-described train axle speed control apparatus.

In order to achieve the above objects, a train axle speed control apparatus is provided according to claim 1.

Optionally, the axle rotation speed detection device may include:
a rotation speed sensor configured to collect the rotation speed information of the train axle; and
a first communication device connected to the rotation speed sensor and the first input end, and configured to acquire and send the rotation speed information.

Optionally, the brake cylinder pressure detection device may include:
a pressure sensor configured to collect the actual pressure value of the compressed gas flowing through the pressure transmission pipeline; and
a second communication device connected to the pressure sensor and the second input end, and configured to acquire and send the actual pressure value.

Optionally, the train axle speed control apparatus may further include:
a log recording device connected to the information processing device and configured to record information and signals received or generated by the information processing device.

Optionally, the brake cylinder pressure detection device may be arranged on an end of the pressure transmission pipeline closer to the train axle.

Optionally, the information processing device may be an on-board central processor.

Optionally, each of the first communication device and the second communication device may wirelessly communicate with the information processing device.

In order to achieve the above objects, a train including a train body and a control system is further provided according to the present invention. The control system is provided with the above train axle speed control apparatus.

.A train axle speed control apparatus is provided according to claim 1, which includes: a pressure control valve configured to adjust, based on a received initial brake cylinder pressure control signal, a received brake cylinder pressure to obtain a processed brake cylinder pressure; a pressure transmission pipeline connected to an output end of the pressure control valve and configured to transmit the processed brake cylinder pressure; a brake cylinder pressure detection device provided on the pressure transmission pipeline and configured to collect and send an actual pressure value of compressed gas flowing through the pressure transmission pipeline; a train brake mechanism configured to brake a train axle, where a brake pressure input end of the train brake mechanism is connected to an output end of the pressure transmission pipeline; an axle rotation speed detection device configured to collect and send rotation speed information of the train axle; and an information processing device, including: a first input end connected to the axle rotation speed detection device, a second input end connected to the brake cylinder pressure detection device, a third input end connected to the output end of the pressure control valve, and an output end connected to an input end of the pressure control valve, where the information processing device is configured to determine whether the rotation speed information received based on the initial brake cylinder pressure control signal and the actual pressure value have a preset correspondence, and generate a new brake cylinder pressure control signal based on the preset correspondence and transmit the new brake cylinder pressure control signal to the pressure control valve in a case where the speed information received based on the initial brake cylinder pressure control signal and the actual pressure value do not have the preset correspondence.

Apparently, according to the technical solutions of the present invention, the brake cylinder pressure detection device is additionally provided on the brake cylinder pressure transmission pipeline for transmitting the provided brake cylinder pressure, to detect the brake cylinder pressure actually transmitted to the train axle, such that a fault can be located more accurately, an axle speed can be adjusted more accurately and more efficiently in conjunction with a detection result, thus improving travel experience of passengers. A train provided with the above-described train axle speed control apparatus is further provided according to the present invention, which achieves the above benefit effects and is not described herein.

### BRIEF DESCRIPTION OF THE DRAWINGS

In order to more clearly describe the technical solution in the embodiments of the present invention or the technical solution in the conventional technology, drawings to be used in the embodiments of the present invention or in the conventional technology are briefly described hereinafter. It is apparent that the drawings described below show merely the embodiments of the present invention, and those skilled in the art may obtain other drawings according to the provided drawings without any creative effort.
Figure 1 is a schematic diagram illustrating configuration of a train axle speed control apparatus according to an embodiment of the present disclosure;
Figure 2 is a schematic diagram illustrating configuration of a train axle speed control apparatus according to another embodiment of the present disclosure; and
Figure 3 is a circuit diagram of an actual train axle speed control apparatus according to an embodiment of the present disclosure.

Reference numerals in the drawings are as follows:
- 10.: Pressure control valve
- 20.: Pressure transmission pipeline
- 30.: Train brake mechanism
- 50.: Train axle
- 60.: Information processing device
- 21.: Brake cylinder pressure detection device
- 51.: Axle rotation speed detection device
- 61.: First input end
- 62.: Second input end
- 63.: Third input end
- 64.: Output end
- 211.: Pressure sensor
- 212.: Second communication device
- 31.: Brake caliper
- 32.: Brake disc
- 511.: Rotation speed sensor
- 512.: First communication device

### DETAILED DESCRIPTION OF EMBODIMENTS

The core of the present invention is to provide a train axle speed control apparatus and a train. In the train axle speed control apparatus, a brake cylinder pressure detection device is additionally provided on a brake cylinder pressure transmission pipeline for transmitting a provided brake cylinder pressure, to detect a brake cylinder pressure actually transmitted to a train axle, such that a fault can be located more accurately, an axle speed can be adjusted more accurately and more efficiently in conjunction with a detection result, thus improving travel experience of passengers.

In order to make the objects, features and advantages of the present invention clearer, the technical solutions in the embodiments of the present disclosure are described clearly and completely in conjunction with the accompanying drawings in the embodiments of the present disclosure hereinafter. It is apparent that the below-described embodiments are merely some rather than all of embodiments of the present invention. . All other embodiments obtained by those skilled in the art based on the embodiments in the present disclosure without any creative work should fall within the protection scope of the present disclosure.

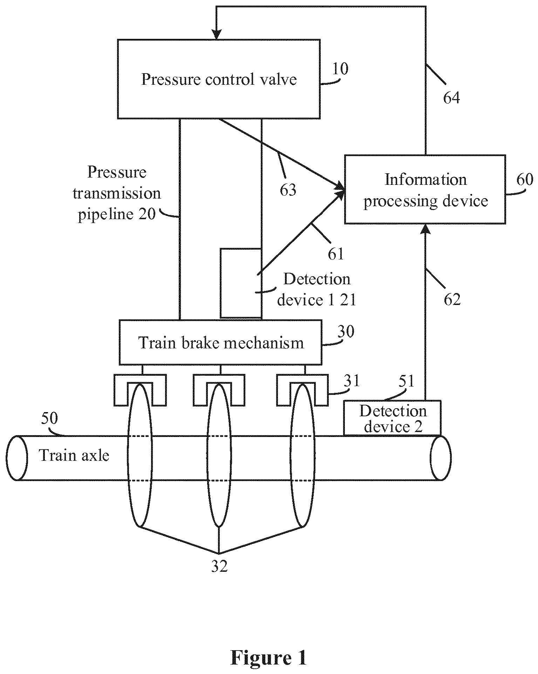

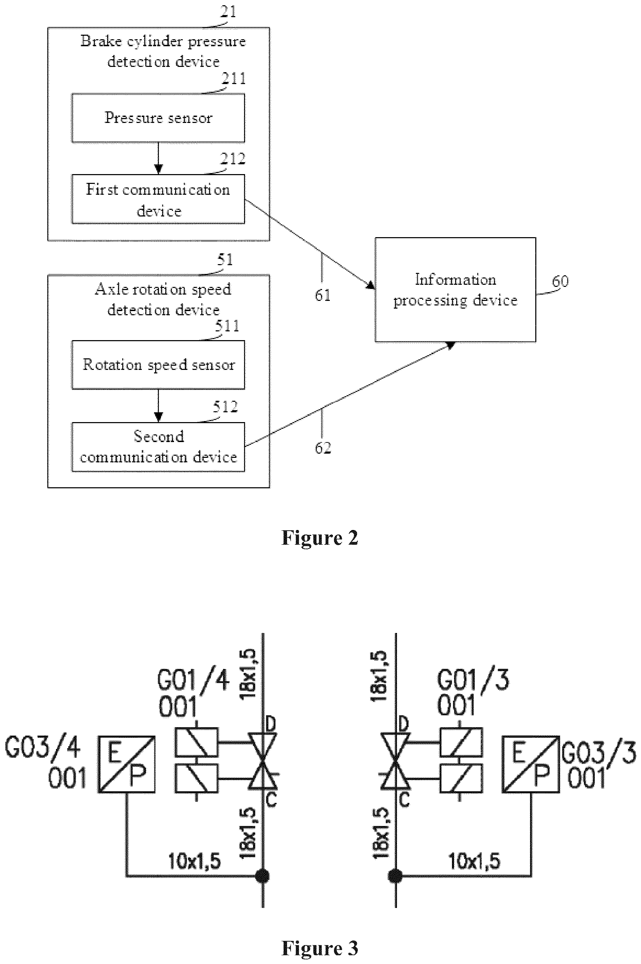

Hereinafter, reference is made to Figures 1 to 2. Figure 1 is a schematic diagram illustrating configuration of a train axle speed control apparatus according to an embodiment of the present invention. . Figure 2 is a schematic diagram illustrating configuration of a train axle speed control apparatus according to another embodiment of the present disclosure.

The train axle speed control apparatus includes a pressure control valve 10, a pressure transmission pipeline 20, a brake cylinder pressure detection device 21, a train brake mechanism 30, an axle rotation speed detection device 51 and an information processing device 60.

The pressure control valve 10 is configured to adjust a received brake cylinder pressure to obtain a processed brake cylinder pressure based on a received initial brake cylinder pressure control signal.

The pressure control valve 10 according to the present disclosure can adjust the received brake cylinder pressure based on the received brake cylinder pressure control signal to obtain the processed brake cylinder pressure. An increased brake cylinder pressure indicates an increased brake force received by the train. In a case where an increasing brake force is applied to a train in which a fault occurs, an axle speed of the train may be decreased at an increasing rate, such that the train may stop quickly, thus ensuring safety and reliability of the train.

Specifically, the brake cylinder pressure is adjusted for decreasing the rotation speed of a train axle 50. That is, the rotation speed of the train axle decreases faster under a greater brake cylinder pressure and decreases slower under a smaller brake cylinder pressure. The present disclosure is intended to adjust the rotation speed of the train axle 50 by a train brake mechanism through adjusting the provided brake cylinder pressure, such that the train axle 50 rotating at an abnormal speed returns to a normal rotation speed.

There are various specific components for achieving the function of the pressure control valve 10. The most suitable component may be determined in conjunction with influence factors such as special requirements and cost requirements according to actual conditions, and is not limited herein.

The pressure transmission pipeline 20 is connected to an output end of the pressure control valve 10 and is configured to transmit the processed brake cylinder pressure.

The pressure transmission pipeline 20 is connected to the output end of the pressure control valve 10 for transmitting the processed brake cylinder pressure. Specifically, it is required that the pressure transmission pipeline 20 meets certain requirements on parameters such as a maximum tolerable pressure, a tolerable temperature, a material and corrosion resistance. The pressure transmission pipeline 20 may be determined flexibly according to actual conditions.

The brake cylinder pressure detection device 21 is arranged on the pressure transmission pipeline 20 and is configured to collect and send an actual pressure value of compressed gas flowing through the pressure transmission pipeline 20.

The train axle speed control apparatus according to the present invention differs from a train axle speed control apparatus in the conventional technology in that, the brake cylinder pressure detection device 21 is additionally provided on the pressure transmission pipeline 20 or another position where an actual pressure value of the compressed gas flowing through a target position in the pressure transmission pipeline may be detected, such that an accurate value best representing the brake force received by the train axle 50 can be obtained.

Specifically, the brake cylinder pressure detection device 21 may include a pressure sensor 211 and a second communication device 212.

The pressure sensor 211 is configured to collect the actual pressure value of the compressed gas flowing through the pressure transmission pipeline 20.

The second communication device 212 is connected to the pressure sensor 211 and a second input end 61 of an information processing device 60, and is configured to acquire and send the actual pressure value.

The brake cylinder pressure detection device 21 is provided for collecting the actual value of the brake cylinder pressure provided to a subsequent train brake mechanism 30. The brake force transmitted to the train brake mechanism 30 may be changed in a case where a failure or a loss, for example, a bend or a break, occurs at a certain position on the pressure transmission pipeline 20. Therefore, by providing the brake cylinder pressure detection device 21, the detected value of the brake cylinder pressure which is an intermediate process value is collected, such that accuracy of determining the cause of an abnormal rotation speed of the train axle 50 can be increased, and a time period for locating a fault can be shortened.

In a case where only one brake cylinder pressure detection device 21 is provided, the brake cylinder pressure detection device 21 may be arranged on an end of the pressure transmission pipeline 20 closer to the train axle 50, since a shorter distance from the brake cylinder pressure detection device 21 to the train axle 50 indicates that the obtained value is more closely approximate to the actual brake force received by the train axle 50.

A brake pressure input end of the train brake mechanism 30 is connected to an output end of the pressure transmission pipeline 20, for braking the train axle 50.

Specifically, as shown in Figure 1, the train brake mechanism 30 includes multiple brake discs 32 and brake calipers 31 respectively corresponding to the brake discs 32. The brake caliper 31 clamps the brake disc 32 when driven by the compressed gas, thereby performing braking by a friction force to decrease the rotation speed of the train axle 50.

The train brake mechanism 30 may be complicated in structure, and may include other devices, apparatus or components for braking the train axle 50. The train brake mechanism 30 may be determined flexibly according to actual conditions and is not specifically limited herein.

Correspondingly, in the presence of additional devices, apparatus or components, in order to determine a fault more accurately, devices similar to the brake cylinder pressure detection device 21 may further be provided on the additional devices, apparatus or components, for collecting output values of the additional apparatus as parameters for determining the fault.

The axle rotation speed detection device 51 is configured to collect and send rotation speed information of the train axle 50.

A function of the axle rotation speed detection device 51 is similar to that of the brake cylinder pressure detection device 21, expect that the axle rotation speed detection device 51 is used for detecting the rotation speed of the train axle which is a final resultant value.

Specifically, the axle rotation speed detection device 51 may include a rotation speed sensor 511 and a first communication device 512.

The rotation speed sensor 511 is configured to collect the rotation speed information of the train axle 50.

The first communication device 512 is connected to the rotation speed sensor 511 and a first input end 62 of the information processing device 60, and is configured to acquire and send the rotation speed information.

The information processing device 60 includes the first input end 62, the second input end 61, a third input end 63 and an output end 64. The first input end 62 is connected to the axle rotation speed detection device 51, the second input end 61 is connected to the brake cylinder pressure detection device 21, the third input end 63 is connected to the output end of the pressure control valve 10, and the output end 64 is connected to an input end of the pressure control valve 10. The information processing device 60 is configured to determine whether the rotation speed information received based on the initial brake cylinder pressure control signal and the actual pressure value have a preset correspondence, and generate a new brake cylinder pressure control signal based on the preset correspondence and transmit the new brake cylinder pressure control signal to the pressure control valve 10 in a case where the rotation speed information received based on the initial brake cylinder pressure control signal and the actual pressure value do not have the preset correspondence.

The information processing device 60 functions to analyze the rotation speed information received through the first input end 62 and the actual brake cylinder pressure value received through the second input end 61, and perform fault determination based on the rotation speed information in combination with the actual brake cylinder pressure value. In practice, the analysis may be performed in various manners. For example, it is first determined whether a difference between the actual brake cylinder pressure value and the brake cylinder pressure value obtained based on the initial brake cylinder pressure control signal is great. A great difference indicates that damages or other faults occur in the pressure transmission pipeline 20 for transmitting the processed brake cylinder pressure, and a solution may be provided accordingly. Analogously, a feasible solution may be finally determined through constant analyses and determinations. If the rotation speed of the train axle can return to normal through adjustment, a new brake cylinder control signal is generated and sent to the pressure control valve 10.

According to anther embodiment, only the first input end 62 and the second input end 61 are provided. The third input end 63 connected to the output end of the pressure control valve 10 is not provided. Instead, multiple brake cylinder pressure detection devices 21 are arranged along the entire pressure transmission pipeline 20 at a predetermined interval, where the multiple brake cylinder pressure detection devices 21 are connected to the first input end 62, such that the entire pressure transmission pipeline 20 is covered by the brake cylinder pressure detection device 21 for detecting the processed brake cylinder pressure values outputted from the output end of the pressure control valve 10 at different positions. In this way, the position at which a fault occurs can be accurately determined based on pressure values detected by two adjacent brake cylinder pressure detection devices 21. This manner is more practical in a case where the pressure transmission pipeline 20 is long.

Generally, the information processing device 60 may be an on-board central processer. The first communication device 512 and the second communication device 212 may transmit the rotation speed information and the actual pressure value to the on-board central processer in a wired or wireless manner.

Furthermore, the train axle speed control apparatus may further include a log recording device.

The log recording device is connected to the information processing device 60 and is configured to record information and signals received or generated by the information processing device 60. The recorded logs may be used for subsequent common fault analysis, and components prone to failure may be strengthened hereby or the component supplier may be replaced, thereby reducing incidence of failures.

Specifically, the log recording device may be arranged in the information processing device, or may be connected to the information processing device 60 as an accessory. The log recording device may be determined flexibly according to actual conditions and is not specifically limited herein.

In the following, reference is made to Figure 3, which is a circuit diagram of an actual train axle speed control apparatus according to an embodiment of the present disclosure.

Names and functions of components in Figure 3 are described below.

The right side and the left side of Figure 3 are symmetrical, and correspond to brake execution mechanisms for two axles respectively. An input end/output end of an antiskid exhaust valve, which is represented by D/C, first contacts compressed gases having a certain pressure transmitted from the train brake cylinder. The antiskid exhaust valve functions to control the brake cylinder pressure received by the train axle controlled by the brake execution mechanism based on a brake cylinder pressure adjustment instruction from an upper layer train antiskid host, for preventing the train from sliding due to an abnormal rotation speed of the train axle.

Solenoid valves, which are represented by G01/3 001 and G01/4 001, are connected to the antiskid exhaust valves, and function to control the antiskid exhaust valves to switch to a preset state based on the power condition of the solenoid valve. Pressure sensors, which are represented by G03/4 001 and G03/3 001, are connected to the compressed gas transmission pipeline at positions shown in the lower part of Figure 3, for detecting the actual brake cylinder pressure value of the compressed gas flowing through this position to provide a feedback of the brake cylinder pressure value as an intermediate process value. The intermediate process value is used for determining a fault in a case of an abnormal rotation speed of the train axle.

Based on the above-described embodiments, a train including a train body and a control system is further provided according to the present disclosure. The control system is provided with the train axle speed control apparatus described above.

Based on the above technical solutions, the train axle speed control apparatus is provided according to the embodiment of the present invention . In the train axle speed control apparatus, the brake cylinder pressure detection device is additionally provided on the brake cylinder pressure transmission pipeline for transmitting the provided brake cylinder pressure, to detect the brake cylinder pressure actually transmitted to a train axle, such that a fault can be located more accurately, an axle speed can be adjusted more accurately and more efficiently in conjunction with a detection result, thus improving travel experience of passengers.

The embodiments in this specification are described in a progressive way, each of which emphasizes the differences from others, and the same or similar parts among the embodiments can be referred to each other. Since the device disclosed in the embodiments corresponds to the method therein, the description thereof is relatively simple, and for relevant matters references may be made to the description of the method.

It may be known by those skilled in the art that, exemplary units and algorithm steps described in conjunction with the embodiments disclosed herein can be realized by electronic hardware, computer software or a combination thereof. In order to clearly illustrate interchangeability of the hardware and the software, steps and composition of each embodiment have been described generally in view of functions in the above specification. Whether the function is executed in a hardware way or in a software way depends on application of the technical solution and design constraint condition. Those skilled in the art can use different method for each application to realize the described function, and this is not considered to be beyond the scope of the application.

It should be further noted that the relationship terminologies such as "first", "second" and the like are only used herein to distinguish one entity or operation from another, rather than to necessitate or imply that the actual relationship or order exists between the entities or operations. Furthermore, terms of "include", "comprise" or any other variants are intended to be non-exclusive. Therefore, a process, method, article or device including a plurality of elements includes not only the elements but also other elements that are not enumerated, or also include the elements inherent for the process, method, article or device. Unless expressively limited otherwise, the statement "comprising (including) one..." does not exclude the case that other similar elements may exist in the process, method, article or device.

## Claims

1. A train axle speed control apparatus, comprising:
a pressure control valve (10) configured to adjust, based on a received initial brake cylinder pressure control signal, a received brake cylinder pressure to obtain a processed brake cylinder pressure;
a pressure transmission pipeline (20) connected to an output end of the pressure control valve (10) and configured to transmit the processed brake cylinder pressure;
a brake cylinder pressure detection device (21) provided on the pressure transmission pipeline (20) and configured to collect and send an actual pressure value of compressed gas flowing through the pressure transmission pipeline (20);
a train brake mechanism (30) configured to brake a train axle, wherein a brake pressure input end of the train brake mechanism (30) is connected to an output end of the pressure transmission pipeline (20);
an axle rotation speed detection device (51) configured to collect and send rotation speed information of the train axle (50); and
an information processing device (60), comprising:
a first input end (62) connected to the axle rotation speed detection device (51),
a second input end (61) connected to the brake cylinder pressure detection device (21),
a third input end (63) connected to the output end of the pressure control valve (10), and
an output end (64) connected to an input end of the pressure control valve (10), **characterized in that**:
the information processing device (60) is configured to:
determine whether the received rotation speed information, corresponding to the processed brake cylinder pressure that is generated in responsive to the initial brake cylinder pressure control signal, and the actual pressure value have a preset correspondence,
generate a new brake cylinder pressure control signal based on the preset correspondence, and
transmit the new brake cylinder pressure control signal to the pressure control valve (10) in a case where the received speed information and the actual pressure value do not meet the preset correspondence.

2. The train axle speed control apparatus according to claim 1, wherein the axle rotation speed detection device (51) comprises:
a rotation speed sensor (511) configured to collect the rotation speed information of the train axle (50); and
a first communication device (512) connected to the rotation speed sensor (511) and the first input end (62), and configured to acquire and send the rotation speed information.

3. The train axle speed control apparatus according to claim 2, wherein the brake cylinder pressure detection device (21) comprises:
a pressure sensor (211) configured to collect the actual pressure value of compressed gas flowing through the pressure transmission pipeline (20); and
a second communication device (212) connected to the pressure sensor (211) and the second input end (61), and configured to acquire and send the actual pressure value.

4. The train axle speed control apparatus according to claim 3, further comprising:
a log recording device connected to the information processing device (60) and configured to record information and signals received or generated by the information processing device.

5. The train axle speed control apparatus according to claim 4, wherein the brake cylinder pressure detection device (21) is arranged on an end of the pressure transmission pipeline (20) closer to the train axle (50).

6. The train axle speed control apparatus according to claim 5, wherein the information processing device (60) is an on-board central processor.

7. The train axle speed control apparatus according to claim 6, wherein each of the first communication device (512) and the second communication device (212) wirelessly communicates with the information processing device (60).

8. A train comprising a train body and a control system, wherein the control system is provided with the train axle speed control apparatus according to any one of claims 1 to 7.

## Patentansprüche

1. Zugachsen-Geschwindigkeitsregelvorrichtung, umfassend:
ein Druckregelventil (10), das zum Anpassen eines empfangenen Bremszylinderdrucks auf Basis eines empfangenen anfänglichen Bremszylinderdruck-Steuersignals zum Erhalten eines bearbeiteten Bremszylinderdrucks konfiguriert ist;
eine Druckübertragungsrohrleitung (20), die mit einem Ausgabeende des Druckregelventils (10) verbunden ist und zum Übertragen des bearbeiteten Bremszylinderdrucks konfiguriert ist;
eine Bremszylinderdruck-Detektionseinrichtung (21), die an der Druckübertragungsrohrleitung (20) bereitgestellt ist und zum Aufnehmen und Senden eines Ist-Druckwerts von durch die Druckübertragungsrohrleitung (20) fließendem komprimiertem Gas konfiguriert ist;
einen Zugbremsmechanismus (30), der zum Bremsen einer Zugachse konfiguriert ist, wobei ein Bremsdruckeingabeende des Zugbremsmechanismus (30) mit einem Ausgabeende der Druckübertragungsrohrleitung (20) verbunden ist;
eine Achsendrehgeschwindigkeits-Detektionseinrichtung (51), die zum Aufnehmen und Senden von Drehgeschwindigkeitsinformationen der Zugachse (50) konfiguriert ist; und
eine Informationsverarbeitungseinrichtung (60), umfassend:
ein erstes Eingabeende (62), das mit der Achsendrehgeschwindigkeits-Detektionseinrichtung (51) verbunden ist,
ein zweites Eingabeende (61), das mit der Bremszylinderdruck-Detektionseinrichtung (21) verbunden ist,
ein drittes Eingabeende (63), das mit dem Ausgabeende des Druckregelventils (10) verbunden ist, und
ein Ausgabeende (64), das mit einem Eingabeende des Druckregelventils (10) verbunden ist,
**dadurch gekennzeichnet, dass**:
die Informationsverarbeitungseinrichtung (60) konfiguriert ist zum:
Bestimmen, ob die empfangenen Drehgeschwindigkeitsinformationen, die dem bearbeiteten Bremszylinderdruck, der als Reaktion auf das anfängliche Bremsdruckzylinderdruck-Steuersignal erzeugt wird, entsprechen, und der Ist-Druckwert eine voreingestellte Entsprechung aufweisen,
Erzeugen eines neuen Bremszylinderdruck-Steuersignals auf Basis der vorgegebenen Entsprechung und
Übertragen des neuen Bremszylinderdruck-Steuersignals zu dem Druckregelventil (10), falls die empfangenen Geschwindigkeitsinformationen und der Ist-Druckwert nicht mit der vorgegebenen Entsprechung übereinstimmen.

2. Zugachsen-Geschwindigkeitsregelvorrichtung nach Anspruch 1, wobei die Achsendrehgeschwindigkeits-Detektionseinrichtung (51) umfasst:
einen Drehgeschwindigkeitssensor (511), der zum Aufnehmen der Drehgeschwindigkeitsinformationen der Zugachse (50) konfiguriert ist; und
eine erste Kommunikationseinrichtung (512), die mit dem Drehgeschwindigkeitssensor (511) und dem ersten Eingabeende (62) verbunden ist und zum Erfassen und Senden der Drehgeschwindigkeitsinformationen konfiguriert ist.

3. Zugachsen-Geschwindigkeitsregelvorrichtung nach Anspruch 2, wobei die Bremszylinderdruck-Detektionseinrichtung (21) umfasst:
einen Drucksensor (211), der zum Aufnehmen des Ist-Druckwerts von durch die Druckübertragungsrohrleitung (20) fließendem komprimiertem Gas konfiguriert ist; und
eine zweite Kommunikationseinrichtung (212), die mit dem Drucksensor (211) und dem zweiten Eingabeende (61) verbunden ist und zum Erfassen und Senden des Ist-Druckwerts konfiguriert ist.

4. Zugachsen-Geschwindigkeitsregelvorrichtung nach Anspruch 3, ferner umfassend:
eine Protokollierungseinrichtung, die mit der Informationsverarbeitungseinrichtung (60) verbunden ist und zum Aufzeichnen von durch die Informationsverarbeitungseinrichtung empfangenen oder erzeugten Informationen und Signalen konfiguriert ist.

5. Zugachsen-Geschwindigkeitsregelvorrichtung nach Anspruch 4, wobei die Bremszylinderdruck-Detektionseinrichtung (21) an einem Ende der Druckübertragungsrohrleitung (20), das näher an der Zugachse (50) ist, angeordnet ist.

6. Zugachsen-Geschwindigkeitsregelvorrichtung nach Anspruch 5, wobei die Informationsverarbeitungseinrichtung (60) ein Bord-Zentralrechner ist.

7. Zugachsen-Geschwindigkeitsregelvorrichtung nach Anspruch 6, wobei die erste Kommunikationseinrichtung (512) und die zweite Kommunikationseinrichtung (212) jeweils kabellos mit der Informationsverarbeitungseinrichtung (60) kommunizieren.

8. Zug, umfassend einen Zugkörper und ein Steuersystem, wobei das Steuersystem mit der Zugachsen-Geschwindigkeitsregelvorrichtung nach einem der Ansprüche 1 bis 7 versehen ist.

## Revendications

1. Appareil de commande de vitesse d'essieu de train, comprenant :
une soupape de commande de pression (10) configurée pour ajuster, sur la base d'un signal de commande de pression de cylindre de frein initial reçu, une pression de cylindre de frein reçue pour obtenir une pression de cylindre de frein traitée ;
une canalisation de transmission de pression (20) raccordée à une extrémité de sortie de la soupape de commande de pression (10) et configurée pour transmettre la pression de cylindre de frein traitée ;
un dispositif de détection de pression de cylindre de frein (21) pourvu sur la canalisation de transmission de pression (20) et configuré pour recueillir et envoyer une valeur de pression réelle de gaz comprimé coulant à travers la canalisation de transmission de pression (20) ;
un mécanisme de freinage de train (30) configuré pour freiner un essieu de train, dans lequel une extrémité d'entrée de pression de frein du mécanisme de freinage de train (30) est raccordée à une extrémité de sortie de la canalisation de transmission de pression (20) ;
un dispositif de détection de vitesse de rotation d'essieu (51) configuré pour recueillir et envoyer une information de vitesse de rotation de l'essieu de train (50) ; et
un dispositif de traitement d'informations (60), comprenant :
une première extrémité d'entrée (62) raccordée au dispositif de détection de vitesse de rotation d'essieu (51),
une deuxième extrémité d'entrée (61) raccordée au dispositif de détection de pression de cylindre de frein (21),
une troisième extrémité d'entrée (63) raccordée à l'extrémité de sortie de la soupape de commande de pression (10), et
une extrémité de sortie (64) raccordée à une extrémité d'entrée de la soupape de commande de pression (10), **caractérisé en ce que** :
le dispositif de traitement d'informations (60) est configuré pour :
déterminer si l'information de vitesse de rotation reçue, correspondant à la pression de cylindre de frein traitée qui est générée en réponse au signal de commande de pression de cylindre de frein initial, et la valeur de pression réelle ont une correspondance préréglée,
générer un nouveau signal de commande de pression de cylindre de frein sur la base de la correspondance préréglée, et
transmettre le nouveau signal de commande de pression de cylindre de frein à la soupape de commande de pression (10) dans le cas dans lequel l'information de vitesse reçue et la valeur de pression réelle ne répondent pas à la correspondance préréglée.

2. Appareil de commande de vitesse d'essieu de train selon la revendication 1, dans lequel le dispositif de détection de vitesse de rotation d'essieu (51) comprend :
un capteur de vitesse de rotation (511) configuré pour recueillir l'information de vitesse de rotation de l'essieu de train (50) ; et
un premier dispositif de communication (512) raccordé au capteur de vitesse de rotation (511) et à la première extrémité d'entrée (62), et configuré pour acquérir et envoyer l'information de vitesse de rotation.

3. Appareil de commande de vitesse d'essieu de train selon la revendication 2, dans lequel le dispositif de détection de pression de cylindre de frein (21) comprend :
un capteur de pression (211) configuré pour recueillir la valeur de pression réelle de gaz comprimé coulant à travers la canalisation de transmission de pression (20) ; et
un deuxième dispositif de communication (212) raccordé au capteur de pression (211) et à la deuxième extrémité d'entrée, et configuré pour acquérir et envoyer la valeur de pression réelle.

4. Appareil de commande de vitesse d'essieu de train selon la revendication 3, comprenant en outre :
un dispositif d'enregistrement de journal de bord raccordé au dispositif de traitement d'informations (60) et configuré pour enregistrer les informations et les signaux reçus du ou générés par le dispositif de traitement d'informations.

5. Appareil de commande de vitesse d'essieu de train selon la revendication 4, dans lequel le dispositif de détection de pression de cylindre de frein (21) est arrangé sur une extrémité de la canalisation de transmission de pression (20) plus près de l'essieu de train (50).

6. Appareil de commande de vitesse d'essieu de train selon la revendication 5, dans lequel le dispositif de traitement d'informations (60) est un processeur central embarqué.

7. Appareil de commande de vitesse d'essieu de train selon la revendication 6, dans lequel chacun du premier dispositif de communication (512) et du deuxième dispositif de communication (212) communique sans fil avec le dispositif de traitement d'informations (60).

8. Train comprenant un corps de train et un système de commande, dans lequel le système de commande est pourvu d'un appareil de commande de vitesse d'essieu de train selon l'une quelconque des revendications 1 à 7.
